# FASCICULE DE BREVET EUROPEEN

(11) **EP 1 992 186 B1**
(45) Date de publication et mention de la délivrance du brevet: **24.01.2018**
(21) Numéro de dépôt: 07722966.4
(22) Date de dépôt: 28.02.2007
(51) Int. Cl.: H04B 7/185

(54) **PROCEDE ET DISPOSITIF DE DETECTION DE TENTATIVES D'INTRUSION SUR UNE LIAISON DE COMMUNICATION ENTRE UN AERONEF ET UNE STATION SOL**
VERFAHREN UND EINRICHTUNG ZUM ERKENNEN VON VERSUCHEN, IN EINE KOMMUNIKATIONSVERBINDUNG ZWISCHEN EINEM FLUGZEUG UND EINER BODENSTATION EINZUDRINGEN
METHOD AND DEVICE FOR DETECTING ATTEMPTS AT INTRUDING ON A COMMUNICATION LINK BETWEEN AN AIRCRAFT AND A GROUND STATION

(30) Priorité: 08.03.2006 FR 0602043
(43) Date de publication de la demande: 19.11.2008
(73) Titulaire: Airbus Operations, 31060 Toulouse (FR)
(72) Inventeur: LECLERCQ, Agnès, F-31500 Toulouse (FR)
(74) Mandataire: Santarelli
(86) Numéro de dépôt international: PCT/EP2007/001713
(87) Numéro de publication internationale: WO 2007/101588

(56) Documents cités:
- EP-A- 0 629 093
- EP-A2- 1 150 531
- WO-A1-00/76117
- US-A1- 2005 037 733
- US-A1- 2005 076 197

## Description

L'invention a pour objet un procédé de détection de tentatives d'intrusion sur une liaison sécurisée de communication entre un aéronef et une station sol, ainsi qu'un aéronef comportant un dispositif susceptible de mettre en oeuvre ce procédé. L'invention concerne également un dispositif de détection de tentatives d'intrusion sur une liaison sécurisée de communication entre un aéronef et une station sol, ainsi qu'un aéronef comportant un tel dispositif.

Les aéronefs modernes, notamment les avions de transport civil, échangent des informations avec des stations basées au sol, en particulier des stations de contrôle aérien ou des stations permettant de communiquer avec les compagnies aériennes exploitant ces aéronefs. Les informations échangées peuvent notamment être relatives à la météorologie, à la maintenance de l'aéronef, à des autorisations du contrôle aérien, etc. Cet échange d'informations est généralement réalisé au moyen de liaisons de données numériques (« datalink » en anglais), correspondant en particulier aux standards ACARS (« Aircraft Communications Adressing and Reporting System » en anglais) ou ATN (« Aeronautical Télécommunication Network » en anglais). Après l'ouverture d'une session de communication, un aéronef et une station sol échangent des messages contenant lesdites informations. Les liaisons de données considérées sont généralement du type radiocommunication ou satellite. Par conséquent, elles peuvent être interceptées par un pirate : celui-ci peut tenter de décoder des messages transmis par l'aéronef ou la station sol, mais aussi envoyer de faux messages censés provenir d'un aéronef ou d'une station sol. Afin de protéger lesdites liaisons de communication contre des agissements de pirates, ces liaisons peuvent être sécurisées : ainsi, il est possible de prévoir une authentification de l'émetteur d'un message et/ou un cryptage des messages. Cela peut, par exemple, être réalisé au moyen de clefs d'authentification et/ou de cryptage. Toutefois, un pirate peut essayer de passer outre ces techniques de sécurisation, notamment en envoyant une pluralité de faux messages jusqu'à ce que l'un d'entre eux soit éventuellement accepté par un aéronef ou une station sol. Le risque d'acceptation d'un faux message par un aéronef ou une station sol est d'autant plus faible que le nombre de faux messages reçus est faible. Par conséquent, afin de minimiser ce risque d'acceptation d'un message émis par un pirate, il est important de détecter les tentatives d'intrusion sur une telle liaison de communication, afin de pouvoir signaler ces tentatives au pilote de l'aéronef et/ou au personnel de la station sol (de la compagnie aérienne ou du contrôle aérien) qui peuvent alors prendre des mesures de vigilance appropriées.

On connait le document WO 00/76117 qui propose un système pour modifier le niveau de sécurité utilisé dans un système de traitement sécurisé. Le niveau de sécurité peut être augmenté avec une relative facilité. Toutefois, lorsqu'il s'agit d'abaisser le niveau de sécurité, un code d'autorisation est utilisé pour confirmer que l'abaissement du niveau de sécurité est autorisé.

On connait également le document US 2005/0076197 A1 qui concerne un procédé de communication dans un système de communication sécurisée, comprenant l'assemblage d'un message au niveau d'un expéditeur comprenant, dans un en-tête du message, une indication du niveau de sécurité du message. Le récepteur du message peut ainsi vérifier le niveau de sécurité du message afin de rejeter celui-ci si son niveau de sécurité n'atteint pas un niveau minimum prédéterminé.

Les problèmes susmentionnés sont résolus, au moins partiellement, conformément à l'invention par un procédé de détection de tentatives d'intrusion sur une liaison de communication entre un aéronef et une station sol. Ce procédé est remarquable en ce que la communication est susceptible d'être configurée selon une pluralité de niveaux de sécurité et qu'il comprend les étapes suivantes :
- a) lorsqu'un message est reçu par un moyen de réception associé à ladite liaison, on analyse ce message pour déterminer un niveau de sécurité correspondant à ce message ;
- b) on compare ledit niveau de sécurité correspondant à ce message reçu, avec un niveau de sécurité associé à la communication ;
- c) si les niveaux de sécurité comparés à l'étape b) sont différents, on vérifie la valeur d'un état de communication associé à ladite liaison, l'état de communication pouvant prendre deux valeurs correspondant respectivement à un état « stable » ou un état « en cours de changement » du niveau de sécurité associé à la liaison de communication, et on effectue une action relative au rejet du message reçu et au signalement d'une tentative d'intrusion en fonction de ladite valeur de l'état de communication.

De cette façon, lors de l'échange de messages sur une liaison de communication sur laquelle une session de communication a préalablement été établie entre un aéronef et une station sol, d'une part on détecte les messages reçus dont le niveau de sécurité ne correspond pas au niveau de sécurité attendu et, d'autre part, on accepte ou on rejette lesdits messages reçus et on signale des tentatives supposées d'intrusion sur ladite liaison. Le procédé selon l'invention présente donc les avantages de permettre le rejet de messages envoyés par un pirate et aussi de signaler les tentatives d'intrusion correspondantes afin qu'un opérateur humain (pilote, personnels du contrôle aérien ou des compagnies aériennes, etc.) puisse prendre les dispositions adéquates.

Dans un mode préféré de réalisation, à l'étape c), ladite action relative au rejet du message reçu et au signalement d'une tentative d'intrusion est choisie dans le groupe suivant :
- A1) on rejette le message reçu et on signale une tentative d'intrusion ; ou
- A2) on rejette le message reçu ; ou
- A3) on accepte le message reçu.

De façon préférée, lorsqu'on rejette le message reçu à l'étape c), on envoie sur ladite liaison de communication un message informant l'émetteur dudit message reçu que celui-ci a été rejeté. Cela présente l'avantage que lorsque ce message reçu provient d'un émetteur autorisé, mais avec un niveau de sécurité inapproprié, cet émetteur est informé du rejet dudit message.

Lorsque l'état de communication correspond à un état « stable », on rejette le message reçu et on signale une tentative d'intrusion. Lorsque cet état de communication correspond à un état « en cours de changement », on rejette le message reçu sans signaler de tentative d'intrusion, étant donné que ce message a pu être émis par l'émetteur autorisé (aéronef ou station sol) avant la prise en compte par cet émetteur du changement du niveau de sécurité.

Encore de façon préférée, à l'étape b), le niveau de sécurité associé à la communication correspond à un niveau de sécurité présélectionné dans des moyens de gestion de communication. En particulier, ce niveau de sécurité peut être sélectionné par un opérateur humain (pilote, etc.) en fonction des circonstances. Cet opérateur peut notamment choisir de relever ledit niveau de sécurité s'il est informé d'une tentative d'intrusion par le procédé selon l'invention. Généralement, afin de changer le niveau de sécurité de la liaison de communication, ces moyens de gestion de communication (d'un aéronef ou d'une station sol) envoient une requête à destination de moyens de gestion de communication situés à une autre extrémité de ladite liaison (respectivement une station sol ou un aéronef) afin que ceux-ci sélectionnent le même niveau de sécurité pour cette liaison.

Dans un mode préféré de réalisation, si les niveaux de sécurité comparés à l'étape b) sont différents, on envoie sur ladite liaison de communication un message demandant à l'émetteur dudit message reçu de changer le niveau de sécurité de la communication pour le porter au même niveau de sécurité que celui présélectionné dans lesdits moyens de gestion de communication. Ainsi, cela présente l'avantage que lorsque ce message reçu provient d'un émetteur autorisé, mais avec un niveau de sécurité inapproprié, il est possible de re-synchroniser automatiquement les niveaux de sécurité correspondant à l'aéronef et à la station sol. Les messages suivants peuvent alors être transmis avec le niveau de sécurité approprié.

Dans un mode particulier de réalisation de l'invention, le niveau de sécurité de la communication est fonction du type de message transmis. Cela permet d'adapter ce niveau de sécurité à l'importance et à la criticité des messages afin de n'envoyer avec un niveau de sécurité élevé (ayant un coût d'envoi souvent plus élevé que pour un niveau de sécurité plus faible) que des messages pour lesquels cela présente une importance.

De façon avantageuse, lorsque à l'étape c) on réalise l'action A1), on incrémente en outre un compteur. Il est ainsi possible de compter les tentatives d'intrusion sur ladite liaison de communication. Ce compteur peut en particulier être consulté à des fins de maintenance ou de statistiques.

Dans un autre mode particulier de réalisation de l'invention, lorsque à l'étape c) on réalise l'action A2), on incrémente en outre un compteur qui est par ailleurs remis à zéro selon une périodicité prédéterminée, et on signale une tentative d'intrusion lorsque la valeur dudit compteur dépasse une valeur de seuil prédéterminée. Cela permet de détecter les situations dans lesquelles on reçoit, sur une période prédéterminée, un nombre suffisamment élevé de messages dont le niveau de sécurité est inapproprié mais dont la réception isolée n'aurait pas été considérée comme une tentative d'intrusion.

Encore de façon préférée, à l'étape c) on réalise l'action A1) ou l'action A2) selon que la valeur dudit état de communication correspond respectivement à un niveau de sécurité stable ou à un niveau de sécurité en cours de changement. Ainsi, lorsqu'on reçoit un message dont le niveau de sécurité n'est pas approprié alors que le niveau de sécurité associé à la liaison de communication est considéré comme étant dans un état stable, on considère qu'il s'agit d'une tentative d'intrusion puisque l'émetteur dudit message est censé l'envoyer avec le niveau de sécurité approprié. Par contre, lorsqu'on reçoit un tel message alors que le niveau de sécurité associé à la liaison de communication est considéré comme étant en cours de changement, on considère qu'il ne s'agit pas d'une tentative d'intrusion. En effet, dans ce cas il est possible que l'émetteur du message n'ait pas encore pris en compte le changement de niveau de sécurité associé à cette liaison.

L'invention concerne également un dispositif de surveillance de communication sur une liaison de communication entre un aéronef et une station sol, comportant :
- des moyens d'émission/réception de messages sur cette liaison de communication ;
- des moyens de gestion de communication reliés aux dits moyens d'émission/réception.

Ce dispositif est remarquable en ce que, la communication étant susceptible d'être configurée selon une pluralité de niveaux de sécurité, il comporte en outre des moyens de surveillance de communication comprenant :
- des premiers moyens aptes à analyser un message reçu par lesdits moyens d'émission/réception pour déterminer un niveau de sécurité correspondant à ce message ;
- des seconds moyens aptes à comparer ledit niveau de sécurité correspondant à ce message reçu, avec un niveau de sécurité associé à la communication et à fournir un résultat de comparaison ;
- des troisièmes moyens aptes à vérifier la valeur d'un état de communication associé à ladite liaison, l'état de communication pouvant prendre deux valeurs correspondant respectivement à un état « stable » ou un état « en cours de changement » du niveau de sécurité associé à la liaison de communication, et à déterminer une action associée à ce message reçu en fonction du résultat de comparaison fourni par les seconds moyens et en fonction de ladite valeur de l'état de communication.

Avantageusement encore, lesdits moyens de gestion de communication comprennent lesdits moyens de surveillance de communication.

Avantageusement encore, les moyens de gestion de communication comprennent en outre des moyens aptes à gérer la valeur dudit état de communication associé à ladite liaison.

Lesdits moyens d'émission/réception de messages sont des moyens d'émission/réception installés à bord dudit aéronef ou dans ladite station sol, selon que l'on souhaite détecter les tentatives d'intrusions relatives aux messages reçus par cet aéronef ou par cette station sol. De façon préférée, l'ensemble du dispositif selon l'invention est installé respectivement dans cet aéronef ou dans cette station sol.

L'invention concerne aussi un aéronef comportant un dispositif de surveillance d'une communication entre un aéronef et une station sol, tel que précité.

L'invention sera mieux comprise à la lecture de la description qui suit et à l'examen de la figure annexée.

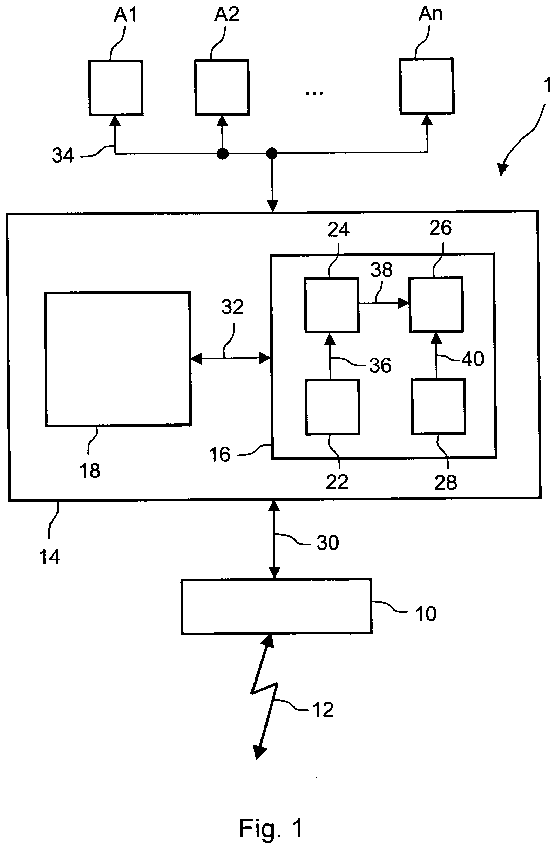

La figure 1 est un schéma synoptique d'un dispositif de surveillance d'une communication entre un aéronef et une station sol conforme à l'invention.

Dans un but de clarté, la description qui suit est relative à un exemple de mise en oeuvre de l'invention dans le cas où l'on cherche à détecter des tentatives d'intrusion relatives à des messages reçus par un aéronef. Bien entendu, cela ne saurait être interprété de façon limitative, l'invention s'appliquant de façon similaire à la détection de tentatives d'intrusion relatives à des messages reçus par une station sol.

Le dispositif 1 conforme à l'invention est représenté schématiquement sur la figure 1. Il est embarqué à bord d'un aéronef, en particulier un avion de transport civil, communicant avec une station sol au moyen d'une liaison de communication 12, en particulier une liaison de données numériques (« datalink » en anglais) susceptible d'être configurée selon une pluralité de niveaux de sécurité par rapport aux risques d'intrusion d'un pirate sur cette liaison.

Ce dispositif est destiné à surveiller les communications sur cette liaison 12 afin de détecter les tentatives d'intrusion d'un pirate sur cette liaison 12. Pour cela, le dispositif 1 conforme à l'invention comporte :
- des moyens d'émission/réception 10 de messages sur une liaison de communication 12 entre ledit aéronef et ladite station sol, par exemple des moyens de communication usuels installés à bord de cet aéronef (moyens de radiocommunication VHF, HF, moyens de communication par satellite, etc.) ;
- des moyens de gestion de communication 14 reliés à ces moyens d'émission/réception 10 par une liaison 30. Ces moyens de gestion de communication peuvent en particulier faire partie d'un calculateur gérant des communications de l'aéronef, par exemple un calculateur de type ATSU (« Air Traffic Services Unit » en anglais) ;
- des moyens de surveillance de communication 16, lesquels comprennent :
   - des premiers moyens 22 aptes à analyser un message reçu par les moyens d'émission/réception 10 pour déterminer un niveau de sécurité associé à ce message ;
   - des seconds moyens 24 aptes à comparer ce niveau de sécurité correspondant à ce message reçu avec un niveau de sécurité associé à la communication et à fournir un résultat de comparaison ;
   - des troisièmes moyens 26 aptes à vérifier la valeur d'un état de communication associé à la liaison 12 et à déterminer une action associée à ce message reçu en fonction d'une part du résultat de comparaison fourni par les seconds moyens 24 et d'autre part de la valeur dudit état de communication.

De façon préférée, les moyens de gestion de communication 14 comportent un routeur 18 qui reçoit des moyens d'émission/réception 10, par la liaison 30, les messages reçus de la liaison de communication 12 et qui envoie chaque message vers au moins une application destinatrice A1, A2, ... An par un ensemble de liaisons 34. Chacune desdites applications peut en particulier être une application informatique installée sur un calculateur de l'aéronef. De façon réciproque, ce routeur collecte des messages provenant desdites applications par l'ensemble de liaisons 34 et les transmet, par la liaison 30, aux moyens d'émission/réception 10 qui les envoient sur la liaison de communication 12.

De façon préférée, encore, comme représenté sur la figure 1, les moyens de surveillance de communication 16 sont intégrés dans les moyens de gestion de communication 14. Ils sont reliés au routeur 18 par une liaison 32.

Les moyens de gestion de communication 14 comprennent en outre des moyens 28 aptes à gérer un état de communication associé à la liaison de communication 12. Ces moyens 28 peuvent notamment être intégrés dans les moyens de surveillance de communication 16. Ces moyens 28 peuvent correspondre à une machine d'états qui peut notamment comporter au moins deux états : un premier état correspondant à un niveau de sécurité de communication stable et un deuxième état correspondant à un niveau de sécurité de communication en cours de changement. Ce deuxième état correspond notamment à une situation dans laquelle les moyens de gestion de communication 14 de l'aéronef ont transmis un message de requête à destination de la station sol afin de changer le niveau de sécurité de la communication (par exemple suite à une demande du pilote de l'aéronef) et dans laquelle lesdits moyens de gestion de communication 14 de l'aéronef n'ont pas encore reçu une acceptation de la station sol relative à ce changement de niveau. Le premier état, quant à lui, correspond notamment à une situation dans laquelle les moyens de gestion de communication 14 de l'aéronef, après avoir transmis un message de requête à destination de la station sol afin de changer le niveau de sécurité de la communication (par exemple suite à une demande du pilote de l'aéronef) ont reçu une acceptation de la station sol relative à ce changement de niveau. Il correspond aussi à une situation dans laquelle les moyens de gestion de communication 14 de l'aéronef ont reçu de la station sol une requête afin de changer le niveau de sécurité de la communication et ont transmis un message d'acceptation de ladite requête à destination de la station sol.

Lorsque les moyens de gestion de communication 14 font partie d'un calculateur de type ATSU, les moyens de surveillance de communication 16 intégrés dans lesdits moyens de gestion de communication 14, ainsi que les premiers moyens 22, les seconds moyens 24, les troisièmes moyens 26 et les moyens 28 aptes à gérer un état de communication, peuvent être mis en oeuvre sous la forme de fonctions logicielles dudit calculateur ATSU.

Le niveau de sécurité de la communication peut notamment être choisi dans l'ensemble de niveaux suivants ou dans un sous-ensemble de cet ensemble :
- absence de sécurité de la communication vis à vis des risques d'attaque par un pirate ;
- authentification de l'émetteur d'un message, par exemple en utilisant des clefs d'authentification ;
- cryptage des messages transmis sur la liaison de données 12, par exemple en utilisant des clefs de cryptage ;
- authentification de l'émetteur d'un message et cryptage des messages transmis sur la liaison de données 12.

Dans un mode préféré de réalisation de l'invention, la communication est susceptible d'être configurée selon :
- un premier niveau correspondant à une absence de sécurité de ladite communication vis à vis des risques d'attaque par un pirate ;
- un second niveau de sécurité correspondant à une authentification de l'émetteur d'un message ; ou
- un troisième niveau de sécurité correspondant à une authentification de l'émetteur d'un message, ainsi qu'à un cryptage des messages transmis sur la liaison de données 12.

Lorsque les moyens d'émission/réception 10 reçoivent un message de la liaison de communication 12, ils le transmettent, par la liaison 30, aux moyens de gestion de communication 14 où ce message est reçu par le routeur 18. Ce dernier le transmet aux premiers moyens 22 intégrés dans les moyens de surveillance de communication 16 par la liaison 32. Ces premiers moyens 22 analysent ce message de façon à déterminer le niveau de sécurité correspondant à ce message. Ce niveau de sécurité est transmis aux seconds moyens 24 par une liaison 36. Lesdits seconds moyens comparent ce niveau de sécurité avec un niveau de sécurité associé à la communication, lequel peut notamment correspondre à un niveau de sécurité présélectionné et mémorisé dans les moyens de gestion de communication 14. En particulier, ce niveau de sécurité peut être présélectionné suite à une requête du pilote ou de la station sol en vue de changer ce niveau de sécurité associé à la communication. Le résultat de la comparaison, entre le niveau de sécurité correspondant au message reçu et le niveau de sécurité associé à la communication, est transmis par les seconds moyens 24 aux troisièmes moyens 26 par une liaison 38.

Dans le cas où lesdits niveaux de sécurité comparés sont identiques, les troisièmes moyens 26 renvoient au routeur, par la liaison 32, une information d'acceptation du message correspondant puisque, dans ce cas, ils n'ont pas détecté de tentative d'intrusion sur la liaison de communication 12. Le routeur transmet alors ce message à l'application destinatrice, par l'ensemble de liaisons 34.

Dans le cas où lesdits niveaux de sécurité comparés sont différents, les troisièmes moyens 26 renvoient au routeur, par la liaison 32, une information de rejet du message correspondant. Par conséquent, le routeur ne transmet pas ce message à l'application destinatrice. De façon avantageuse, les moyens de gestion de communication 14 envoient un message vers la station sol, par l'intermédiaire de la liaison 30, des moyens d'émission/réception 10 et de la liaison de communication 12, afin d'informer cette station sol du rejet dudit message. Ces moyens de gestion de communication 14 envoient aussi à la station sol un message lui demandant de changer le niveau de sécurité présélectionné dans ladite station sol pour le porter au même niveau de sécurité que celui présélectionné dans les moyens de gestion de communication 14 de l'aéronef. De cette façon, si le message reçu (et rejeté) provenait de la station sol, celle-ci peut prendre les mesures appropriées pour le renvoyer avec le niveau de sécurité convenable. En outre, les troisièmes moyens 26 vérifient la valeur d'un état de communication associé à la liaison de communication 12. Les troisièmes moyens 26 reçoivent cet état de communication des moyens 28 par une liaison 40. Cet état de communication correspond à l'un desdits au moins premier et second états précités. Dans le cas où il correspond au premier état (niveau de sécurité de communication stable), on considère qu'il y a une tentative d'intrusion sur la liaison de communication 12 puisque, préalablement à la réception dudit message, la communication était établie de façon stable avec un niveau de sécurité correspondant à celui associé à la communication. Par conséquent, les troisièmes moyens 26 signalent une tentative d'intrusion. Cette tentative d'intrusion peut, par exemple, être signalée à un calculateur (non représenté sur la figure 1) de gestion d'alarmes de l'aéronef de type FWC (« Flight Warning Computer » en anglais) ou à un moyen de type DCDU (« Digital Communications Display Unit » en anglais) ou MCDU (« Multifunction Control Display Unit » en anglais) associé à la liaison de communication 12 et apte à afficher une information relative à ladite tentative d'intrusion. Lorsque ledit état de communication correspond au second état (niveau de sécurité de communication en cours de changement), on ne considère pas qu'il y a une tentative d'intrusion sur la liaison de communication 12 puisque, préalablement à la réception dudit message, le niveau de sécurité de communication était en cours de changement : par conséquent, le message reçu peut provenir de la station sol, même si cela n'est pas certain. Les troisièmes moyens 26 ne signalent donc pas de tentative d'intrusion dans ce cas.

Dans un mode particulier de réalisation de l'invention, lorsque lesdits niveaux de sécurité comparés par les seconds moyens 24 sont différents, si le niveau de sécurité correspondant au message reçu correspond audit second niveau (authentification de l'émetteur du message) et que le niveau de sécurité associé à la communication correspond au troisième niveau (authentification de l'émetteur et cryptage du message), les troisièmes moyens 26 renvoient au routeur, par la liaison 32, une information d'acceptation du message correspondant. Le routeur transmet alors ce message à l'application destinatrice, par l'ensemble de liaisons 34. En effet, on peut considérer que dans ce cas il n'y a pas de tentative d'intrusion sur la liaison de communication 12 puisque le message est reçu avec une authentification de l'émetteur : si celle-ci correspond bien à ladite station sol, on estime que le message ne provient pas d'un pirate qui tenterait une intrusion sur la liaison de communication 12.

Selon une première variante de l'invention, le niveau de sécurité de la communication est commun à tous les messages circulant sur la liaison de communication 12 entre l'aéronef et cette station sol.

Selon une autre variante, lorsque les messages circulant sur ladite liaison de communication sont susceptibles d'être classés selon différents types de messages, le niveau de sécurité de la communication est fonction du type de message. Cela présente l'avantage de permettre d'adapter le niveau de sécurité à l'importance et à la criticité des messages. Ainsi, il est possible de n'envoyer avec un niveau de sécurité élevé (par exemple ledit troisième niveau) que des messages pour lesquels cela présente une importance. Cela permet de réduire les coûts d'exploitation de l'aéronef lorsque le coût de transmission d'un message est croissant en fonction du niveau de sécurité correspondant à ce message. A titre d'exemple, un premier type de messages dénommé ATC (« Air Traffic Control » en anglais) peut correspondre aux messages échangés entre l'aéronef et le contrôle aérien et un second type de messages dénommé AOC (« Airline Operational Control » en anglais) peut correspondre aux messages échangés entre l'aéronef et la compagnie aérienne exploitant cet aéronef.

De façon préférée, lorsque les troisièmes moyens 26 signalent une tentative d'intrusion, ils déclenchent en outre l'incrémentation d'un compteur (non représenté sur la figure 1) dans les moyens de surveillance de communication 16. Ce compteur peut notamment être lu lors d'opérations de maintenance de l'aéronef afin d'être utilisé à des fins de statistiques. Dans un mode particulier de réalisation, les moyens de surveillance de communication 16 comportent plusieurs compteurs et lors d'une tentative d'intrusion on incrémente l'un desdits compteurs choisi en fonction du niveau de sécurité correspondant au message reçu, du niveau de sécurité de la communication et de l'état de communication associé à la liaison de communication 12. Dans la variante de l'invention selon laquelle le niveau de sécurité de la communication est fonction du type de message, on peut associer un compteur à chaque type de message. Dans ce cas, lorsque les troisièmes moyens 26 signalent une tentative d'intrusion, on incrémente le compteur associé au type de message correspondant au message reçu.

Dans un mode particulier de réalisation de l'invention, lorsque les troisièmes moyens 26 renvoient au routeur 18 une information de rejet du message reçu, sans signaler une tentative d'intrusion, ils déclenchent en outre l'incrémentation d'un autre compteur (non représenté sur la figure 1) dans les moyens de surveillance de communication 16. Cela correspond notamment au cas où le niveau de sécurité correspondant au message reçu et le niveau de sécurité de la communication sont différents et où l'état de communication correspond à un niveau de sécurité en cours de changement. Ce compteur est remis à zéro selon une périodicité régulière, indépendamment de la réception des messages. S'il vient à dépasser une valeur prédéterminée, les troisièmes moyens 26 signalent une tentative d'intrusion. En effet, s'il est possible de considérer qu'il n'y a pas de tentative d'intrusion lors de la réception d'un nombre limité de messages dont le niveau de sécurité est inapproprié lors d'un changement du niveau de sécurité de la liaison de communication 12, il n'en va pas de même lorsque ce nombre de messages est élevé, en particulier lorsqu'il est supérieur à ladite valeur prédéterminée.

## Revendications

1. Procédé de détection de tentatives d'intrusion sur une liaison de communication (12) entre un aéronef et une station sol, **caractérisé en ce que** la communication est susceptible d'être configurée selon une pluralité de niveaux de sécurité et qu'il comprend les étapes suivantes:
a) lorsqu'un message est reçu par un moyen de réception (10) associé à ladite liaison (12), on analyse ce message pour déterminer un niveau de sécurité correspondant à ce message;
b) on compare ledit niveau de sécurité correspondant à ce message reçu, avec un niveau de sécurité associé à la communication;
c) si les niveaux de sécurité comparés à l'étape b) sont différents, on vérifie la valeur d'un état de communication associé à ladite liaison, l'état de communication pouvant prendre deux valeurs correspondant respectivement à un état « stable » ou un état « en cours de changement » du niveau de sécurité associé à la liaison de communication, et on effectue une action relative au rejet du message reçu et au signalement d'une tentative d'intrusion en fonction de ladite valeur de l'état de communication.

2. Procédé selon la revendication 1, **caractérisé en ce que** ladite action relative au rejet du message reçu et au signalement d'une tentative d'intrusion est choisie dans le groupe suivant:
A1) on rejette le message reçu et on signale une tentative d'intrusion; ou
A2) on rejette le message reçu; ou
A3) on accepte le message reçu.

3. Procédé selon l'une quelconque des revendications précédentes, **caractérisé en ce qu'**à l'étape b), le niveau de sécurité associé à la communication correspond à un niveau de sécurité présélection né dans des moyens de gestion de communication (14).

4. Procédé selon la revendication 3, **caractérisé en ce que** si les niveaux de sécurité comparés à l'étape b) sont différents, on envoie sur ladite liaison de communication (12) un message demandant à l'émetteur dudit message reçu de changer le niveau de sécurité de ladite communication pour le porter au même niveau de sécurité que celui présélectionné dans lesdits moyens de gestion de communication (14).

5. Procédé selon l'une quelconque des revendications précédentes, **caractérisé en ce que** le niveau de sécurité de la communication est fonction du type de message transmis.

6. Procédé selon la revendication 2, **caractérisé en ce que**, lorsque à l'étape c) on réalise l'action A1), on incrémente en outre un compteur.

7. Procédé selon l'une quelconque des revendications 2 ou 6, **caractérisé en ce que**, lorsque à l'étape c) on réalise l'action A2), on incrémente en outre un compteur qui est par ailleurs remis à zéro selon une périodicité prédéterminée, et on signale une tentative d'intrusion lorsque la valeur dudit compteur dépasse une valeur de seuil prédéterminée.

8. Procédé selon l'une quelconque des revendications précédentes, **caractérisé en ce que** la communication est susceptible d'être configurée selon :
- un premier niveau correspondant à une absence de sécurité de ladite communication vis à vis des risques d'attaque par un pirate;
- un second niveau de sécurité correspondant à une authentification de l'émetteur d'un message; ou
- un troisième niveau de sécurité correspondant à une authentification de l'émetteur d'un message, ainsi qu'à un cryptage des messages transmis sur la liaison de données (12).

9. Procédé selon la revendication 8 combinée avec l'une quelconque des revendications 2, 6 ou 7, **caractérisé en ce qu'**à l'étape c), lorsque le niveau de sécurité du message reçu correspond audit second niveau et le niveau de sécurité associé à la communication correspond audit troisième niveau, on réalise l'action A3).

10. Procédé selon l'une quelconque des revendications 2, 6 ou 7, **caractérisé en ce qu'**à l'étape c) on réalise l'action A 1) ou l'action A2) selon que la valeur dudit état de communication correspond respectivement à un niveau de sécurité stable ou à un niveau de sécurité en cours de changement.

11. Dispositif (1) de surveillance de communication sur une liaison de communication (12) entre un aéronef et une station sol, comportant :
- des moyens d'émission/réception (10) de messages sur cette liaison de communication (12) ;
- des moyens de gestion de communication (14) reliés aux dits moyens d'émission/réception (10) ; **caractérisé en ce que**, la communication étant susceptible d'être configurée selon une pluralité de niveaux de sécurité, il comporte en outre des moyens de surveillance de communication (16) comprenant:
- des premiers moyens (22) aptes à analyser un message reçu par lesdits moyens d'émission/réception (10) pour déterminer un niveau de sécurité correspondant à ce message;
- des seconds moyens aptes (24) à comparer ledit niveau de sécurité correspondant à ce message reçu, avec un niveau de sécurité associé à la communication et à fournir un résultat de comparaison;
- des troisièmes moyens (26) aptes à vérifier la valeur d'un état de communication associé à ladite liaison, l'état de communication pouvant prendre deux valeurs correspondant respectivement à un état « stable » ou un état « en cours de changement » du niveau de sécurité associé à la liaison de communication, et à déterminer une action associée à ce message reçu en fonction du résultat de comparaison fourni par les seconds moyens (24) et en fonction de ladite valeur de l'état de communication.

12. Dispositif selon la revendication 11, **caractérisé en ce que** les moyens de gestion de communication (14) comprennent en outre des moyens (28) aptes à gérer la valeur dudit état de communication associé à ladite liaison (12).

13. Aéronef comportant un dispositif (1) de surveillance de communication selon l'une quelconque des revendications 11 à 12.

## Patentansprüche

1. Verfahren zum Erkennen von Versuchen, in eine Kommunikationsverbindung (12) zwischen einem Flugzeug und einer Bodenstation einzudringen, **dadurch gekennzeichnet, dass** die Kommunikation geeignet ist, nach einer Vielzahl von Sicherheitsniveaus konfiguriert zu werden, und dass es die folgenden Schritte umfasst:
a) wenn eine Nachricht von einem der Verbindung (12) zugeordneten Empfangsmittel (10) empfangen wird, Analyse dieser Nachricht, um ein dieser Nachricht zugeordnetes Sicherheitsniveau zu bestimmen;
b) Vergleich des dieser empfangenen Nachricht zugeordneten Sicherheitsniveaus mit einem der Kommunikation zugeordneten Sicherheitsniveau;
c) wenn die in Schritt b) verglichenen Sicherheitsniveaus unterschiedlich sind, Überprüfen des Werts eines der Verbindung zugeordneten Kommunikationszustands, wobei der Kommunikationszustand zwei Werte annehmen kann, die einem "stabilen" Zustand bzw. einem "in Veränderung befindlichen" Zustand des der Kommunikationsverbindung zugeordneten Sicherheitsniveaus entsprechen, und Ausführen einer Handlung zur Abweisung der empfangenen Nachricht und zur Anzeige eines Eindringversuchs in Abhängigkeit von dem Wert des Kommunikationszustands.

2. Verfahren nach Anspruch 1, **dadurch gekennzeichnet, dass** die Handlung zur Abweisung der empfangenen Nachricht und zur Anzeige eines Eindringversuchs in der folgenden Gruppe ausgewählt wird:
A1) Abweisen der empfangenen Nachricht und Anzeigen eines Eindringversuchs; oder
A2) Abweisen der empfangenen Nachricht; oder
A3) Annehmen der empfangenen Nachricht.

3. Verfahren nach einem der vorhergehenden Ansprüche, **dadurch gekennzeichnet, dass** in Schritt b) das der Kommunikation zugeordnete Sicherheitsniveau einem vorausgewählten Sicherheitsniveau, das in den Kommunikationssteuerungsmitteln (14) entsteht, entspricht.

4. Verfahren nach Anspruch 3, **dadurch gekennzeichnet, dass**, wenn die in Schritt b) verglichenen Sicherheitsniveaus unterschiedlich sind, auf der Kommunikationsverbindung (12) eine Nachricht gesandt wird, die den Sender der empfangenen Nachricht auffordert, das Sicherheitsniveau der Kommunikation zu verändern, um es auf dasselbe Sicherheitsniveau wie das in den Kommunikationssteuerungsmitteln (14) vorausgewählte zu bringen.

5. Verfahren nach einem der vorhergehenden Ansprüche, **dadurch gekennzeichnet, dass** das Sicherheitsniveau der Kommunikation vom übertragenen Nachrichtentyp abhängt.

6. Verfahren nach Anspruch 2, **dadurch gekennzeichnet, dass**, wenn in Schritt c) die Handlung A1) ausgeführt wird, ferner ein Zähler inkrementiert wird.

7. Verfahren nach einem der Ansprüche 2 oder 6, **dadurch gekennzeichnet, dass**, wenn in Schritt c) die Handlung A2) ausgeführt wird, ferner ein Zähler inkrementiert wird, der überdies mit einer vorbestimmten Regelmäßigkeit auf Null gesetzt wird, und ein Eindringversuch angezeigt wird, wenn der Wert des Zählers einen vorbestimmten Grenzwert überschreitet.

8. Verfahren nach einem der vorhergehenden Ansprüche, **dadurch gekennzeichnet, dass** die Kommunikation konfiguriert werden kann nach:
- einem ersten Niveau entsprechend einem Fehlen einer Sicherheit der Kommunikation gegenüber Angriffsgefahren durch einen Hacker;
- einem zweiten Sicherheitsniveau entsprechend einer Authentifizierung des Senders einer Nachricht; oder
- einem dritten Sicherheitsniveau entsprechend einer Authentifizierung des Senders einer Nachricht sowie einer Verschlüsselung der auf der Datenverbindung (12) übertragenen Nachrichten.

9. Verfahren nach Anspruch 8 in Kombination mit einem der Ansprüche 2, 6 oder 7, **dadurch gekennzeichnet, dass** in Schritt c), wenn das Sicherheitsniveau der empfangenen Nachricht dem zweiten Niveau entspricht und das der Kommunikation zugeordnete Sicherheitsniveau dem dritten Niveau entspricht, die Handlung A3) ausgeführt wird.

10. Verfahren nach einem der Ansprüche 2, 6 oder 7, **dadurch gekennzeichnet, dass** in Schritt c) die Handlung A1) oder die Handlung A2) ausgeführt wird, je nachdem, ob der Wert des Kommunikationszustands einem stabilen Sicherheitsniveau bzw. einem in Veränderung befindlichen Sicherheitsniveau entspricht.

11. Vorrichtung (1) zur Überwachung einer Kommunikation auf einer Kommunikationsverbindung (12) zwischen einem Flugzeug und einer Bodenstation, umfassend:
- Sende-/Empfangsmittel (10) von Nachrichten auf dieser Kommunikationsverbindung (12);
- Kommunikationssteuerungsmittel (14), die mit den Sende-/Empfangsmitteln (10) verbunden sind; **dadurch gekennzeichnet, dass**, wobei die Kommunikation geeignet ist, nach einer Vielzahl von Sicherheitsniveaus konfiguriert zu werden, sie ferner Mittel zur Überwachung einer Kommunikation (16) umfasst, umfassend:
- erste Mittel (22), die geeignet sind, eine von den Sende-/Empfangsmitteln (10) empfangene Nachricht zu analysieren, um ein dieser Nachricht entsprechendes Sicherheitsniveau zu bestimmen;
- zweite Mittel (24), die geeignet sind, das dieser empfangenen Nachricht entsprechende Sicherheitsniveau mit einem der Kommunikation zugeordneten Sicherheitsniveau zu vergleichen und ein Vergleichsergebnis zu liefern;
- dritte Mittel (26), die geeignet sind, den Wert eines der Verbindung zugeordneten Kommunikationszustands zu überprüfen, wobei der Kommunikationszustand zwei Werte annehmen kann, die einem "stabilen" Zustand bzw. einem "in Veränderung befindlichen" Zustand des der Kommunikationsverbindung zugeordneten Sicherheitsniveaus entsprechen, und eine Handlung, die dieser empfangenen Nachricht zugeordnet ist, in Abhängigkeit von dem von den zweiten Mitteln (24) gelieferten Vergleichsresultat und dem Wert des Kommunikationszustands zu bestimmen.

12. Vorrichtung nach Anspruch 11, **dadurch gekennzeichnet, dass** die Kommunikationssteuerungsmittel (14) ferner Mittel (28) umfassen, die geeignet sind, den Wert des der Verbindung (12) zugeordneten Kommunikationszustands zu steuern.

13. Flugzeug, umfassend eine Vorrichtung (1) zur Überwachung einer Kommunikation nach einem der Ansprüche 11 bis 12.

## Claims

1. Method for detecting intrusion attempts on a communication link (12) between an aircraft and a ground station, **characterized in that** the communication is liable to be configured according to a plurality of security levels and that it comprises the following steps:
- a) when a message is received by a receiving means (10) associated with the said link (12), this message is analysed to determine a security level corresponding to this message;
- b) the said security level corresponding to this message received is compared with a security level associated with the communication;
- c) if the security levels compared in step b) are different, the value of a communication state associated with the said link is verified, the communication state being able to take two values corresponding respectively to a "stable" state or to a state "undergoing change" of the security level associated with the communication link, and an action relating to the rejection of the message received and to the signalling of an intrusion attempt is performed as a function of the said value of the communication state.

2. Method according to Claim 1, **characterized in that** the said action relating to the rejection of the message received and to the signalling of an intrusion attempt is chosen from the following group:
- A1) the message received is rejected and an intrusion attempt is signalled; or
- A2) the message received is rejected; or
- A3) the message received is accepted.

3. Method according to any one of the preceding claims, **characterized in that** in step b), the security level associated with the communication corresponds to a preselection security level born in communication management means (14).

4. Method according to Claim 3, **characterized in that** if the security levels compared in step b) are different, a message is dispatched on the said communication link (12) asking the sender of the said message received to change the security level of the said communication so as to bring it to the same security level as that preselected in the said communication management means (14).

5. Method according to any one of the preceding claims, **characterized in that** the security level of the communication is dependent on the type of message transmitted.

6. Method according to Claim 2, **characterized in that**, when in step c) the action A1) is carried out, a counter is furthermore incremented.

7. Method according to either one of Claims 2 or 6, **characterized in that**, when in step c) the action A2) is carried out, a counter is furthermore incremented, which counter is moreover reset to zero according to a predetermined periodicity, and an intrusion attempt is signalled when the value of the said counter exceeds a predetermined threshold value.

8. Method according to any one of the preceding claims, **characterized in that** the communication is liable to be configured according to:
- a first level corresponding to an absence of security of the said communication in relation to the risk of attack by a hacker;
- a second security level corresponding to an authentication of the sender of a message; or
- a third security level corresponding to an authentication of the sender of a message, as well as to an encryption of the messages transmitted on the data link (12).

9. Method according to Claim 8 combined with any one of Claims 2, 6 or 7, **characterized in that** in step c), when the security level of the message received corresponds to the said second level and the security level associated with the communication corresponds to the said third level, the action A3) is carried out.

10. Method according to any one of Claims 2, 6 or 7, **characterized in that** in step c) the action A1) or the action A2) is carried out depending on whether the value of the said communication state corresponds respectively to a stable security level or to a security level undergoing change.

11. Device (1) for monitoring communication on a communication link (12) between an aircraft and a ground station, comprising:
- means for sending/receiving (10) messages on this communication link (12);
- communication management means (14) linked to the said sending/receiving means (10); **characterized in that**, the communication being liable to be configured according to a plurality of security levels, it furthermore comprises communication monitoring means (16) comprising:
- first means (22) able to analyse a message received by the said sending/receiving means (10) to determine a security level corresponding to this message;
- second means (24) able to compare the said security level corresponding to this message received with a security level associated with the communication and to provide a comparison result;
- third means (26) able to verify the value of a communication state associated with the said link, the communication state being able to take two values corresponding respectively to a "stable" state or to a state "undergoing change" of the security level associated with the communication link, and to determine an action associated with this message received as a function of the comparison result provided by the second means (24) and as a function of the said value of the communication state.

12. Device according to Claim 11, **characterized in that** the communication management means (14) furthermore comprise means (28) able to manage the value of the said communication state associated with the said link (12).

13. Aircraft comprising a communication monitoring device (1) according to either one of Claims 11 to 12.
